# EUROPÄISCHE PATENTSCHRIFT

(11) **EP 1 864 875 B1**
(45) Veröffentlichungstag und Bekanntmachung des Hinweises auf die Patenterteilung: **14.04.2010**
(21) Anmeldenummer: 07106563.5
(22) Anmeldetag: 20.04.2007
(51) Int. Cl.: B60T 7/04, B60K 26/02, G05G 5/03

(54) **Betätigungsvorrichtung für ein Fahrzeugbremssystem, insbesondere für ein "By-Wire Bremssystem"**
Actuating device for a vehicle braking system, in particular for a by-wire braking system
Dispositif d'actionnement pour un système de frein de véhicule, en particulier pour un système de freinage à câble

(30) Priorität: 09.06.2006 DE 102006026873
(43) Veröffentlichungstag der Anmeldung: 12.12.2007
(73) Patentinhaber: ROBERT BOSCH GMBH, 70442 Stuttgart (DE)
(72) Erfinder: Eschler, Johannes, 71254, Ditzingen (DE); Klaiber, Tobias, 71665, Vaihingen (DE)

(56) Entgegenhaltungen:
- EP-A- 1 138 564
- EP-A1- 1 512 599
- WO-A-2005/070738
- DE-A1- 10 062 505
- DE-A1- 10 229 843
- FR-A1- 2 822 428
- GB-A- 2 114 717

## Beschreibung

Die Erfindung betrifft eine Betätigungsvorrichtung für ein Fahrzeugsbremssystem, insbesondere für ein "By-Wire Bremssystem", mit einem Bremspedal und einer Bremspedalachse, an der das Bremspedal drehbar angeordnet ist. Die Erfindung betrifft ferner ein Fahrzeug mit einer derartigen Betätigungsvorrichtung.

Bei Fahrzeugbremssystemen können elektrische Leitungen zur Übertragung des Bremswunsches von einem Bremspedal oder einem anderen Stellteil zu einer Steuereinheit zum Einsatz kommen. Am Bremspedal sind dazu in der Regel Sensoren angeordnet, mit denen durch Kraft- und/oder Verstellwegmessungen typischerweise der Bremswunsch des Fahrers erkannt wird. Die Messsignale werden von einer Steuereinheit erfasst, welche sie zur Berechnung der erforderlichen Sollverzögerung verwendet. Abhängig von der Ausführungsform der Radaktuatoren ermittelt die Steuereinheit elektrische oder hydraulische Sollwerte und steuert die an den Rädern des Fahrzeugs angebrachten Aktuatoren an.

Bei der elektrischen Übertragung des Bremswunsches besteht keine mechanische Verbindung und damit wirkt das Bremssystem nicht zwangsläufig mechanisch auf das Stellteil der Bremse rück. Solche Rückwirkungen können bei einem hydraulischen Bremssystem beispielsweise beim Pulsieren der Hydraulikpumpe entstehen, wenn diese sich im Regelmodus des Antiblockiersystems (ABS-Eingriff) befindet. Fahrer können die Pedalreaktion als Rückmeldung für einen niedrigen Haft- bzw. Reibwert der Räder auf der Straße nutzen.

Es wurden daher Lösungen für Fahrzeugbremsen mit einer elektrischen Übertragung des Bremswunsches entwickelt, die dem Fahrer die von hydraulischen Bremssystemen bekannte Pedalreaktion und das damit einhergehende typische Bremsempfinden bei Betätigung der Bremse zur Verfügung stellen. So ist beispielsweise aus der DE 102 29 843 A1 ein motorangetriebener Rückkopplungsmechanismus bekannt, bei dem das Bremspedal mit einer Welle verbunden ist, die von einem bidirektionalen Motor angetrieben und drehmomentgesteuert betrieben wird. Die Ansteuerung des bidirektionalen Motors erfolgt über eine Motorsteuereinheit in Verbindung mit einem geeigneten Mikroprozessor, wobei Sensoren zum Messen von Pedalparametern und zum Bereitstellen einer Rückkopplung für den Mikroprozessor vorgesehen sind. Bei dem aus der DE 102 29 843 A1 bekannten motorangetriebenen Rückkopplungsmechanismus ist das Bremspedal fest mit der über den bidirektionalen Motor antreibbaren Welle verbunden, so dass ein beim Betreiben des Motors bewirktes Drehen der Welle unmittelbar in eine Drehung des Bremspedals umgesetzt wird. Letztlich kann so über eine geeignete Ansteuerung des bidirektionalen Motors, die über die Sensoren, den Mikroprozessor und die Motorsteuereinheit realisiert wird, dem Fahrer die erwünschte Kraftrückkopplung bereitgestellt werden. Ein Ausfall des bidirektionalen Motors hat neben dem Ausfall des Rückkopplungsmechanismus jedoch zusätzlich zur Folge, dass das Bremspedal aufgrund der bestehenden Verbindung zu der Welle nicht mehr ohne weiteres um diese drehbar ist. Um insbesondere bei einer Blockade des bidirektionalen Motors weiterhin einen hinreichenden Rückkopplungsmechanismus zu realisieren, ist die Welle über ein aufwendiges Getriebe in Form eines Planetenradsystems mit dem bidirektionalen Motor gekoppelt, welches hautsächlich dazu dient, den von dem bidirektionalen Motor zugeführten Drehmomentpegel auf für die Welle geeignete Pegel umzusetzen. Insgesamt betrachtet ist daher der aus der DE 102 29 843 A1 bekannte motorangetriebene Rückkopplungsmechanismus verhältnismäßig aufwendig gestaltet, um einen wirksamen Rückkopplungsmechanismus bereitzustellen, der insbesondere auch bei einer Blockade des bidirektionalen Antriebsmotors noch hinreichend aufrechterhalten werden kann. Dies hat auch zur Folge, dass eine herkömmliche Betätigungsvorrichtung zur Integration der aus der DE 102 29 843 A1 bekannten Vorrichtung nur aufwendig umzurüsten ist.

EP-A-1 138 564 offenbart eine Betätigungsvorrichtung für ein Fahrzeugbremssystem nach dem Oberbegriff des Anspruchs 1.

### Zugrundeliegende Aufgabe

Der Erfindung liegt die Aufgabe zugrunde, eine Betätigungsvorrichtung für ein Fahrzeugsbremssystem, insbesondere für ein "By-Wire Bremssystem" anzugeben, die einfach gestaltet ist und einen wirksamen Rückkopplungsmechanismus bereitstellt, und die zudem, ohne große Änderungen vornehmen zu müssen, auf der Basis einer herkömmlichen Betätigungsvorrichtung für ein hydraulisches Bremssystem realisiert werden kann.

### Erfindungsgemäße Lösung

Diese Aufgabe ist erfindungsgemäß mit einer Betätigungsvorrichtung gemäß Anspruch 1 und einem Fahrzeug gemäß Anspruch 9 gelöst. Erfindungsgemäß ist eine Betätigungsvorrichtung für ein Fahrzeugsbremssystem, insbesondere für ein "By-Wire Bremssystem", mit einem Bremspedal und einer Bremspedalachse, an der das Bremspedal drehbar angeordnet ist, vorgesehen. Die Bremspedalachse ist selbst drehbar gestaltet und mit einem Drehantrieb versehen. Sie ist ferner zumindest entlang eines Abschnitts exzentrisch ausgebildet, wobei das Bremspedal an dem Abschnitt drehbar angeordnet ist.

Durch die erfindungsgemäße Betätigungsvorrichtung kann auf einfache Weise durch Drehung der zumindest abschnittsweise exzentrisch ausgebildeten Bremspedalachse (wobei die Symmetrieachse von deren exzentrischem Abschnitt also nicht mit der Drehachse der Bremspedalachse zusammenfällt) eine pulsierende Bewegung des Bremspedals erzeugt werden, an die ein Fahrer von herkömmlichen hydraulischen Bremssystem gewöhnt ist. Ferner kann dem Fahrer durch die so erzeugte Pedalpulsation haptisch eine Rückmeldung über einen niedrigen Haft- bzw. Reibwert an den Fahrzeugrädern oder einen ABS-Einsatz angezeigt werden.

Das Drehen der Bremspedalachse erfolgt über einen Drehantrieb, wie einen Motor, der an die Bremspedalachse gekoppelt ist. Der Drehantrieb kann erfindungsgemäß von einem Steuergerät angesteuert werden, welches nach Maßgabe eines Rückmeldesignals aus dem restlichen Bremssystems dessen Zustand erkennt.

Erfindungsgemäß ist das Bremspedal schwenkbar an dem exzentrisch ausgebildeten Abschnitt der Bremspedalachse angeordnet, also insbesondere nicht fest mit der Bremspedalachse verbunden. Dies hat den Vorteil, dass bei Ausfall des Drehantriebs der Bremspedalachse lediglich die Pedalpulsation nicht mehr realisiert werden kann, während die Betätigungsvorrichtung für weitere Funktionen problemlos weiter einsetzbar ist, da die Verschwenkbarkeit des Bremspedals um die Bremspedalachse von einem Ausfall des Drehantriebs nicht beeinflusst wird. Insbesondere ist ein Ausfall eines Drehantriebs ohne Einfluss auf das jeweilige Bremssystem und die Bremsfunktion.

Schließlich kann auch eine gewöhnliche Betätigungsvorrichtung eines Bremssystems mit nur geringen Änderungen und ohne großen Aufwand in die erfindungsgemäße Betätigungsvorrichtung umfunktioniert werden. Hierzu ist lediglich die Bremspedalachse einer üblichen Betätigungsvorrichtung durch eine zumindest abschnittsweise exzentrisch ausgebildete und drehbare Bremspedalachse zu ersetzen und ein Drehantrieb für die Bremspedalachse bereitzustellen, der von einem geeigneten Steuersystem angesteuert wird. Die übrigen Komponenten können ohne Veränderung beibehalten werden.

Bei der erfindungsgemäßen Betätigungsvorrichtung ist die Bremspedalachse mit einen Drehantrieb gekoppelt, um die Bremspedalachse zu drehen, wobei die Kopplung bevorzugt über ein Getriebe erfolgt, das zwischen dem Drehantrieb und der Bremspedalachse angeordnet ist. Bei praktischen Weiterbildungen der erfindungsgemäßen Betätigungsvorrichtung kann als Drehantrieb ein elektrischer, hydraulischer oder pneumatischer Drehantrieb verwendet werden.

Vorzugsweise ist der exzentrisch ausgebildete Abschnitt, an dem das Bremspedal drehbar angeordnet ist, einstückig mit der Bremspedalachse ausgebildet, wobei vorzugsweise der gesamte Mittelbereich der Bremspedalachse exzentrisch ausgebildet ist. Alternativ kann der exzentrisch ausgebildete Abschnitt auch zweiteilig ausgebildet sein, mit einem nicht exzentrisch ausgebildeten inneren Teilstück und einem auf diesem Teilstück angebrachten Exzenterelement. Auf diese Weise können auf der Basis einer Grundachse einfach und kostengünstig mehrere, für verschiedenartige Pedalpulsationen erforderliche Exzentrizitäten bereitgestellt werden.

Bei einer Weiterbildung der erfindungsgemäßen Betätigungsvorrichtung ist das Bremspedal mit einer Bremssteuereinheit gekoppelt, vorzugsweise derart, dass das Bremspedal über eine Koppelstange, die an dem Bremspedal angebracht und mit der Bremssteuereinheit verbunden ist, mit der Bremssteuereinheit gekoppelt ist. Die Bremssteuereinheit dient erfindungsgemäß der Erzeugung des für ein "By-Wire Bremssystem" erforderlichen Bremspedalgefühls, welches der Fahrer von einem herkömmlichen hydraulischen Bremssystem kennt und gewohnt ist. Dieses Bremspedalgefühl hängt unter anderem von der Kraft ab, die zur Betätigung der Bremse vom Fuß des Fahrers auf das Bremspedal zu übertragen ist, und ferner von dem jeweils resultierenden Bremspedalweg bei Betätigung des Bremse, der jeweiligen Dämpfung und der Hysterese. Die Bremssteuereinheit ist dazu angepasst, all diese Einflussgrößen zu berücksichtigen und ein Bremspedalgefühl über die Koppelstange auf das Bremspedal zu übertragen. Zur Realisierung eines realistischen Bremspedalgefühls werden der Bremssteuereinheit entsprechende Messsignale von Sensoren zur Verfügung gestellt, die vorzugsweise an dem Bremspedal angebracht sind, um beispielsweise die vom Fahrer auf das Bremspedal übertragene Kraft bzw. den Weg messen, den das Bremspedal bei Betätigung zurücklegt. Die so erfindungsgemäß vorgesehene Funktion der Bereitstellung eines Bremspedalgefühls wird durch einen Ausfall des oben beschriebenen Drehantriebs, der für die Erzeugung einer Pedalpulsation vorgesehen ist, nicht beeinflusst. Ein Ausfall des Drehantriebs hat lediglich zur Folge, dass eine Pedalpulsation vorübergehend nicht bereitgestellt werden kann. Die Funktion der Bremssteuereinheit bzw. die Funktion der Betriebsbremse ist hiervon jedoch nicht betroffen.

### Kurzbeschreibung der Zeichnungen

Nachfolgend wird ein Ausführungsbeispiel einer erfindungsgemäßen Betätigungsvorrichtung anhand der beigefügten schematischen Zeichnungen näher erläutert. Es zeigt:
- Fig. 1: eine schematische Seitenansicht einer erfindungsgemäßen Betätigungsvorrichtung, und
- Fig. 2: eine schematische Vorderansicht der erfindungsgemäßen Betätigungsvorrichtung aus Fig. 1.

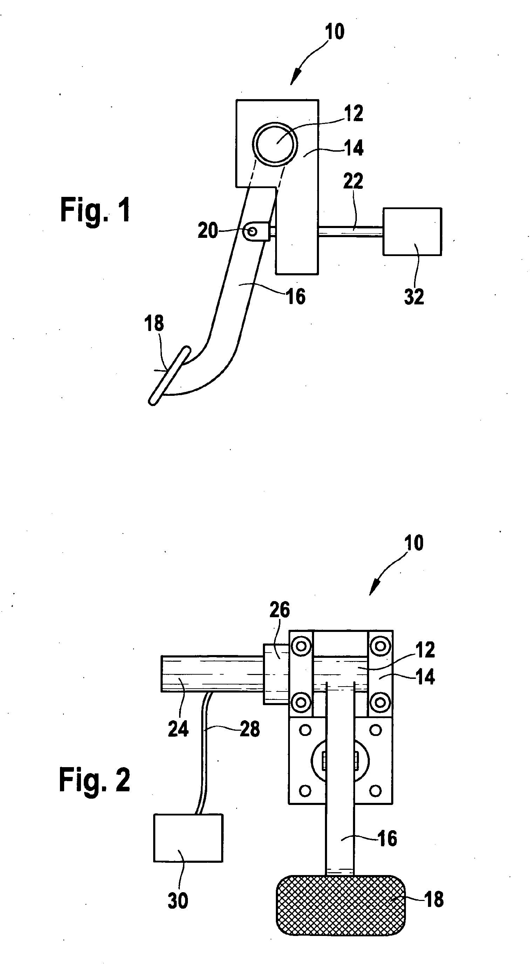

Fig. 1 zeigt eine schematische Vorderansicht einer erfindungsgemäßen Betätigungsvorrichtung 10 für ein weiter nicht dargestelltes "By-Wire Bremssystem" eines Kraftfahrzeugs.

Eine Bremspedalachse 12 ist in einem Bremspedalblock 14 drehbar aufgenommen. Auf der Bremspedalachse 12 ist der eine Endbereich eines im Wesentlichen stabförmigen Bremspedals 16 drehbar gelagert, welches an seinem anderen Endbereich mit einer Trittfläche 18 versehen ist.

Die Bremspedalachse 12 ist im mittleren Abschnitt, dort wo auch das Bremspedal 16 drehbar gelagert ist, exzentrisch ausgebildet, derart, dass die Symmetrieachse dieses Abschnitts der Bremspedalachse 12 von der Drehachse der Bremspedalachse 12 um eine vorgegebene Exzentrizität beabstandet ist. Die Exzentrizität beträgt zwischen ca. 0,8 mm und 2,2 mm, bevorzugt zwischen ca. 1,0 mm und 2,0 mm.

Bei Drehung der Bremspedalachse 12 erfolgt mittels der derart ausgebildeten Exzentrizität eine Verschwenkung des Bremspedals 16 um die Bremspedalachse 12, und zwar mit einer Amplitude, die von der jeweils vorgegebenen Exzentrizität abhängt. Typische Werte für eine zu realisierende Amplitude, gemessen an der Trittfläche 18 des Bremspedals 16, liegen im Bereich zwischen ca. 0 mm und ca. 5,0 mm, mit einer typischen Pulsationsfrequenz im Bereich zwischen ca. 1 Hz. und ca. 10 Hz.

Aufgrund dieser vergleichsweise kleinen Amplituden ist es nicht erforderlich, dass die Ruhelage bzw. Nulllage der drehbaren Bremspedalachse 12 im Normalbetrieb des Bremssystems besonders beachtet werden müsste. Das Ansteuern bzw. Verdrehen der in ihrem Mittelbereich exzentrischen Bremspedalachse 12 wird dadurch wesentlich vereinfacht.

Als Drehantrieb ist für die Bremspedalachse 12 ein Elektromotor 24 mit einem Getriebe 26 vorgesehen, welches an die Bremspedalachse 12 gekoppelt ist. Die Bremspedalachse 12, der Elektromotor 24 und die Getriebeübersetzung des Getriebes 26 sind zur Erzielung von Amplituden und Pulsationsfrequenzen innerhalb der obigen Wertebereiche entsprechend ausgelegt. Der Elektromotor sollte aus Kostengründen vorteilhaft ein üblicher Gleichstrommotor (DC-Motor) sein. Das Getriebe 26 ist derart ausgelegt, dass an die erforderliche Spielfreiheit, das maximale Drehmoment und die notwendige Leistung des Elektromotors 24 nur geringe Anforderungen zu stellen sind.

Die erforderliche Leistung und das erforderliche Drehmoment des Elektromotors 24 hängen von den jeweiligen Vorgaben für die erwünsche Amplitude und Frequenz der Pedalpulsation ab. Der Elektromotor 24 selbst ist über eine elektrische Steuerleitung 28 mit einem Steuergerät 30 des "By-Wire Bremssystems" verbunden, für das die erfindungsgemäße Betätigungsvorrichtung 10 vorgesehen ist, und ferner zur Energieversorgung mit einem Energiebordnetz (nicht dargestellt) des zugehörigen Fahrzeugs verbunden.

An dem Bremspedal 16 ist ferner etwa in der Mitte seiner Längserstreckung ein Drehzapfen 20 angebracht, an dem eine Koppelstange 22 drehbar angeordnet ist. Die Koppelstange 22 durchsetzt längsverschiebbar einen Teil des Bremspedalblocks 14 und ist mit einer Bremssteuereinheit 32 (auch BOU genannt für "Brake Operation Unit") verbunden, welche der Erzeugung des für das "By-Wire Bremssystem" erforderlichen Bremspedalgefühls dient.

Über die so mittels der Koppelstange 22 vorgenommene Kopplung des Bremspedals 16 mit der Bremsteuereinheit 32, kann ein jeweils zu erzeugendes Bremspedalgefühl auf das Bremspedal 16 und letztlich über die Trittfläche 18 auf den Fahrerfuß übertragen werden.

Bei normalem Betrieb ohne Pulsation des Bremspedals 16 wird die vom Fahrerfuß auf das Bremspedal 16 übertragene Kraft in die Bremssteuereinheit 32 eingeleitet und an der Bremspedalachse 12 abgestützt. Ein Betriebsausfall des Elektromotors 24 hätte lediglich den Ausfall der Pulsationsfunktion zur Folge, das jeweilige "By-Wire Bremssystem" und die Bremsfunktion an sich wären hiervon nicht betroffen.

Die in den Fig. 1 und 2 dargestellte erfindungsgemäße Betätigungsvorrichtung 10 lässt sich, ohne große Änderungen vornehmen zu müssen, aus einer herkömmlichen Betätigungsvorrichtung für ein hydraulisches Bremssystem realisieren. Hierzu sind lediglich der Bremspedalblock 14 und die Bremspedalachse 12 geringfügig umzuändern, unter anderem mit dem Vorteil, dass eine Anpassung an eine Spezifikation eines Fahrzeugherstellers ohne großen Aufwand möglich ist.

## Patentansprüche

1. Betätigungsvorrichtung (10) für ein Fahrzeugbremssystem, insbesondere für ein Fahrzeug-"By-Wire Bremssystem", mit einem Bremspedal (16) und einer drehbaren Bremspedalachse (12), an der das Bremspedal (16) drehbar angeordnet ist, **dadurch gekennzeichnet, dass** die Bremspedalachse (12) selbst drehbar gestaltet, mit einem Drehantrieb (24) versehen sowie entlang eines Abschnitts exzentrisch ausgebildet ist, und das Bremspedal (16) an dem Abschnitt drehbar angeordnet ist.

2. Betätigungsvorrichtung (10) nach Anspruch 1, **dadurch gekennzeichnet, dass** der Abschnitt einstückig mit der Bremspedalachse (12) gestaltet ist.

3. Betätigungsvorrichtung nach Anspruch 1, **dadurch gekennzeichnet, dass** der Abschnitt zweistückig ausgebildet ist, mit einem nicht exzentrisch ausgebildetes ersten Teilstück und einem auf diesem aufgesetzten zweiten Teilstück in Form eines Exzenterelements.

4. Betätigungsvorrichtung nach einem der Ansprüche 1 bis 3, **dadurch gekennzeichnet, dass** die drehbare Bremspedalachse (12) über ein Getriebe (26) mit dem Drehantrieb (24) gekoppelt ist.

5. Betätigungsvorrichtung nach einem der Ansprüche 1 bis 4, **dadurch gekennzeichnet, dass** der Drehantrieb (24) ein elektrischer, hydraulischer oder pneumatischer Drehantrieb ist.

6. Betätigungsvorrichtung nach einem der Ansprüche 1 bis 5, **dadurch gekennzeichnet, dass** das Bremspedal (16) mit einer Bremssteuereinheit gekoppelt ist.

7. Betätigungsvorrichtung nach Anspruch 6, **dadurch gekennzeichnet, dass** das Bremspedal (16) über eine Koppelstange (22), die an dem Bremspedal (16) angebracht und mit der Bremssteuereinheit verbunden ist, mit der Bremssteuereinheit gekoppelt ist.

8. Fahrzeug mit einer Betätigungsvorrichtung (10) nach einem der Ansprüche 1 bis 7.

## Claims

1. Activation device (10) for a vehicle brake system, in particular for a vehicle brake-by-wire system, having a brake pedal (16) and a rotatable brake pedal axle (12) on which the brake pedal (16) is rotatably mounted, **characterized in that** the brake pedal axle (12) is itself configured in a rotatable fashion, is provided with a rotary drive (24) and is of eccentric design along a section, and the brake pedal (16) is rotatably arranged on the section.

2. Activation device (10) according to Claim 1, **characterized in that** the section is configured in one piece with the brake pedal axle (12).

3. Activation device according to Claim 1, **characterized in that** the section is designed in two pieces, with a first component piece which is not of eccentric design and a second component piece, in the form of an eccentric element, which is fitted thereon.

4. Activation device according to one of Claims 1 to 3, **characterized in that** the rotatable brake pedal axle (12) is coupled to the rotary drive (24) via a gear mechanism (26).

5. Activation device according to one of Claims 1 to 4, **characterized in that** the rotary drive (24) is an electric, hydraulic or pneumatic rotary drive.

6. Activation device according to one of Claims 1 to 5, **characterized in that** the brake pedal (16) is coupled to a brake control unit.

7. Activation device according to Claim 6, **characterized in that** the brake pedal (16) is coupled to the brake control unit via a coupling rod (22), which is mounted on the brake pedal (16) and is connected to the brake control unit.

8. Vehicle having an activation device (10) according to one of Claims 1 to 7.

## Revendications

1. Dispositif d'actionnement (10) pour un système de freinage de véhicule, en particulier pour un système de freinage par câble d'un véhicule, comprenant une pédale de frein (16) et un axe de pédale de frein rotatif (12), sur lequel est disposée, de manière rotative, la pédale de frein (16), **caractérisé en ce que** l'axe de pédale de frein (12) est configuré de manière auto-rotative, est pourvu d'un entraînement en rotation (24) et est réalisé de manière excentrée le long d'une portion et **en ce que** la pédale de frein (16) est disposée de manière rotative sur la portion.

2. Dispositif d'actionnement (10) selon la revendication 1, **caractérisé en ce que** la portion est configurée d'une seule pièce avec l'axe de la pédale de frein (12).

3. Dispositif d'actionnement selon la revendication 1, **caractérisé en ce que** la portion est réalisée en deux parties, avec une première pièce partielle qui n'est pas excentrée et une deuxième pièce partielle posée sur celle-ci, en forme d'élément excentré.

4. Dispositif d'actionnement selon l'une quelconque des revendications 1 à 3, **caractérisé en ce que** l'axe de la pédale de frein rotatif (12) est accouplé par le biais d'une transmission (26) à l'entraînement en rotation (24).

5. Dispositif d'actionnement selon l'une quelconque des revendications 1 à 4, **caractérisé en ce que** l'entraînement en rotation (24) est un entraînement en rotation électrique, hydraulique ou pneumatique.

6. Dispositif d'actionnement selon l'une quelconque des revendications 1 à 5, **caractérisé en ce que** la pédale de frein (16) est accouplée à une unité de commande de frein.

7. Dispositif d'actionnement selon la revendication 6, **caractérisé en ce que** la pédale de frein (16) est accouplée à l'unité de commande de frein par le biais d'une tige d'accouplement (22) qui est montée sur la pédale de frein (16) et qui est connectée à l'unité de commande de frein.

8. Véhicule comprenant un dispositif d'actionnement (10) selon l'une quelconque des revendications 1 à 7.
